# EUROPEAN PATENT SPECIFICATION

(11) **EP 3 704 720 B1**
(45) Date of publication and mention of the grant of the patent: **30.12.2020**
(21) Application number: 18804438.2
(22) Date of filing: 22.10.2018
(51) Int. Cl.: D04H 1/413, D04H 1/541, D04H 1/587, D04H 1/64, D04H 1/65, C09K 5/14, H01B 3/48

(54) **THERMALLY CONDUCTIVE ELECTRICAL INSULATION MATERIAL**
WÄRMELEITENDES STROMISOLIERMATERIAL
MATÉRIAU ISOLANT ÉLECTRIQUE THERMOCONDUCTEUR

(30) Priority: 02.11.2017 US 201762580634 P
(43) Date of publication of application: 09.09.2020
(73) Proprietor: 3M Innovative Properties Company, St. Paul, MN 55133-3427 (US)
(72) Inventor: HUANG, Mitchell T., Saint Paul Minnesota 55133-3427 (US); TURPIN, Robert H., Saint Paul Minnesota 55133-3427 (US)
(74) Representative: Bergen, Katja
(86) International application number: PCT/US2018/056878
(87) International publication number: WO 2019/089260

(56) References cited:
- WO-A1-90/15841
- WO-A1-2012/082180

## Description

### BACKGROUND OF THE INVENTION

### Field of the Invention

This invention relates to materials suitable for electrical insulation applications. In particular, this invention relates to electrical insulation materials suitable for automatically inserted slot liners used in motors, generators, and other electrical devices. In particular, the present technology relates to a thermally conductive electrical insulating material comprising a thermally conductive nonwoven mat laminate construction.

### BACKGROUND

Heat is an undesirable by-product of electrical transformers, motors, generators, and other electrical devices. Higher operating temperatures typically reduce device lifetime and reliability as well as impose design constraints on the actual device design. The electrical insulation materials, such as conventional electrical insulating nonwoven materials, nonwoven materials or laminate materials, used in electrical transformers, motors, and generators often are poor thermal conductors and can limit heat dissipation of the device. Slot liner insulation is typically used to electrically insulate the conductor wire windings from the stator or rotor metal slot surface. However, conventional electrical insulation materials used as slot liners possess relatively low thermal conductivities and slot liner insulation is positioned directly in a critical heat path between the current carrying, heat generating wires and the metal of the stator or rotor.

Improving the thermal transfer performance of an electrical device can provide lower temperature increases with conventional electrical device designs or can enable new smaller electrical device designs. Lower device operating temperatures provide improved reliability according to the Arrhenius equation which infers that a 10°C decrease in operating temperature doubles the lifetime of the insulation materials. Lower device operating temperatures can also improve the efficiency of the electrical device by reducing the resistive (Joule heating) losses. Lower device operating temperatures may also enable the electrical device to run at higher power levels or provide higher overload capacity. Lower temperature rise could also enable device redesign to more compact device sizes and more efficient use of raw materials by using less amount of metal which could reduce total device system cost.

Thermal transfer performance can be improved by changing the heat transfer media to one having a higher thermal conductivity or by replacing materials that have high thermal resistances to materials having lower thermal resistance or a higher thermal conductivity.

Many of these conventional papers are typically used in high-temperature electrical insulation applications in which thermal stability, electrical properties and the mechanical properties of these papers are important. Conventional electrical insulating nonwoven materials typically have a thermal conductivity of 0.25 W/m-K or less. When these papers are used in electromagnetic coil windings, heat generated in a conductor accumulates and the temperature of the coil rises because the heat cannot be efficiently transported out of the coil winding. As a result of heat build-up, which can be due to the relatively low thermal conductivity of conventional electrical insulating nonwoven materials, the power density of the coil is restricted.

More recently, a thermally conductive, electrical insulating paper material having a thermal conductivity greater than 0.4 W/m-K are described in United States Patent Publication No. 2018-0061523 that comprises aramid fibers, an aramid pulp, a binder material; and a blend of thermally conductive fillers, wherein the blend comprises a primary thermally conductive filler; and a secondary thermally conductive filler. These papers can be used as electrical insulation for electrical transformer cores or windings or as manual, hand inserted motor/generator slot liners. However, the low elongation of these papers is not desirable for use in slot liner automatic insertion equipment where the slot liner is cuffed and bent back on itself at the ends of the slot liner to aid in maintaining the slot liner in position during subsequent wire winding and coil forming steps.

However, there remains a need for a higher thermal conductivity of electrical insulation material for used in automatic insertion equipment for electrical motors, generators, and other electrical devices

WO 2012/082180 discloses a thermally conductive, electrically insulating material comprising upper and lower nonwoven layers laminated on either side of a paper material comprising an acrylic latex, kaolin clay particles and acrylic staple fibres. The nonwoven layers comprise polyester staple fibers and synthetic core-sheath binder fibers.

### SUMMARY

There is a need in certain electrical insulation applications for materials with higher thermal conductivity that achieve suitable performance in electrical equipment applications. The exemplary nonwoven materials and laminate constructions described herein are suitable for automatic insertion operations into electrical components such as motors, generators, and other devices requiring insulation of electrical components.

The present invention relates to a thermally conductive, electrical insulating nonwoven material that comprises 20 wt.% - 50 wt.% organic components, wherein the organic components comprise organic drawn fibers, organic bi-component binder fibers, and a polymer latex binder comprising at least one of an acrylic latex, an acrylic copolymer latex, a nitrile latex, and a styrene latex; and 50 wt.% - 80 wt.% inorganic components wherein the inorganic components comprise a blend of thermally conductive fillers and clay. The organic bi-component binder fibers have a polymeric core and a sheath layer surrounding the polymeric core wherein the sheath layer has a lower melting point than the core.

In an exemplary aspect, the exemplary nonwoven materials, described herein, are cellulose free and as such are suitable for use in electrical insulation system thermal classes 155 (Class F), 180 (Class H), and 200 (Class N).

As used in this specification:
"Nonwoven material" means a sheet material primarily comprised of long fibers;
"Long fibers" means fibers greater than or equal to one inch in length;
"MD" or "machine direction" refers to the direction parallel to the windup direction of a continuous sheet of material; and
"CD" or "cross direction" refers to the direction perpendicular to the windup direction of a continuous sheet of material.

The above summary of the present invention is not intended to describe each disclosed embodiment or every implementation of the present invention. The detailed description that follows below more specifically illustrates embodiments of the invention.

### DETAILED DESCRIPTION OF THE EMBODIMENTS

In the following description, it is to be understood that other embodiments are contemplated and may be made without departing from the scope of the present invention. The following detailed description, therefore, is not to be taken in a limiting sense.

The exemplary thermal conductivity, insulating nonwoven materials described herein can improve heat dissipation out of the electrical devices resulting in lower operating temperatures. In addition, the improved heat dissipation from higher thermally conductive papers may allow reductions in device/coil size where improved heat dissipation/lower operating temperature from the higher thermally conductive papers can help compensate for the increased operating temperature resulting from device size reduction without significantly changing the operating temperature of the device resulting in a smaller size transformer with lower total system material costs.

The exemplary thermally conductive nonwoven materials, as described herein, or thermally conductive laminates including the exemplary thermally conductive thermally conductive nonwoven materials also have potential for use as slot liners in electrical motor/generator applications where the slot liners are hand/manually inserted. Motor manufacturers desire higher thermal conductivity slot liner insulation materials for improved heat dissipation in motors/generators. In order to work as a slot liner, the insulating material must have sufficient flexibility so that it can be bent and shaped for insertion into the slots in the motor stator and/or rotor.

Conventional means of improving the thermal conductivity of a material is to put the highest loading of the highest thermally conductive fillers into the material. High thermal conductivity fillers include fillers that have a thermal conductivity greater than 50 W/m-K and include carbon nanotubes, diamond particles and boron nitride. These high thermal conductivity fillers can be expensive for routine use in electrical insulating materials used in electrical components such as transformers, motors, generators, etc.

The exemplary nonwoven materials of the present invention include 20 wt.% to 50 wt.%, preferably about 30 wt.% to about 45 wt.% organic components, wherein a portion of the organic components are fibrous and 50 wt.% to 80 wt.%, preferably about 55 wt.% to about 80 wt.%, inorganic components. The organic components include organic fibers and binder materials. A portion of the inorganic component comprises a blend of thermally conductive fillers, wherein the blend comprises a first thermally conductive filler; and a second thermally conductive filler. The inorganic components can also include other thermally conductive fillers, low thermally conductive fillers, other inorganic fillers, inorganic flame retardants, inorganic pigments and the like.

The nonwoven material of at least some embodiments of the present invention comprises a sheet material made of long fibers, i.e., fibers greater than or equal to one inch (2.54 cm) long. The exemplary nonwoven materials are typically made primarily of organic fibers but can contain inorganic fibers. Examples of suitable organic fibers for making the nonwoven fabric include, but are not limited to, polyphenylene sulfide (PPS), polyesters including polyethylene terephthalate (PET) (i.e. having a crystallinity greater than about 40%), undrawn or low crystallinity fibers (i.e. less than or equal to 10% crystalline), and poly(cyclohexylenedimethylene terepthalate) (PCT), glycol-modified polyester, polyamide (nylon) polyester fibers, polyester copolymer fibers, bicomponent fibers comprising a core and a sheath wherein at least one of the core and the sheath is one of the polyester materials provided above and the other of the core and the sheath can be formed of a polyester material, a polyolefin such as polyethylene or polypropylene, polyamide, and polyphenylene sulfide. At least some embodiments of nonwoven fabrics suitable for use in the present invention may include poly ester fibers and bicomponent fibers.

In at least one embodiment of the present invention, the organic component of the nonwoven material also comprises a polymeric binder to coat and bind the inorganic components to the organic fibers in the nonwoven material. The polymeric binder can make up about 30% - 50% of the organic component. The polymer binder is selected from acrylic latex, acrylic copolymer latex, nitrile latex and styrene latex. In one example, the electrically insulating nonwoven material comprises from about 10% to about 25% polymeric binder by weight.

Suitable nonwoven materials include a combination of organic drawn fibers and binder fibers. The organic fibers can make up about 50% - 70% of the organic component of nonwoven material. The organic fibers can vary in chemical composition as well as size and can be selected to improve the manufacturability of the exemplary nonwoven material as well as the final properties.

The organic drawn fibers typically comprise oriented polymers which provide strength and dimensional stability to the nonwoven material. Exemplary drawn fibers can include meta-aramid and para-aramid fibers; polyphenylene sulfide (PPS) fibers; polyester fibers; polyamide fibers, acrylic fibers, melamine fibers, polyetheretherketone (PEEK) fibers, polyimide fibers or a combination thereof.

The binder fibers can be undrawn fibers that are largely amorphous (i.e. having low crystallinity), wherein the largely amorphous fibers comprise undrawn polyester, co-polyester, or polyphenylene sulfide fibers, or can be organic bi-component fibers. The organic bi-component binder fibers comprise a polymeric core and a sheath layer surrounding the polymeric core wherein the sheath layer has a lower melting point than the core. In an exemplary embodiment, the organic bi-component binder fibers comprise a polyester core surrounded by a polyphenylene sulfide, or a co-polyester sheath.

As mentioned above, the electrically insulating nonwoven material comprises a blend of thermally conductive fillers, wherein the blend comprises a first thermally conductive filler and a second thermally conductive filler. The first and second thermally conductive fillers can be selected from boron nitride (e.g. hexagonal boron nitride platelet particles possess an anisotropic thermal conductivity with reported values of 400 W/m-K in the (xy) basal plane direction and 2 W/m-K in the (z) platelet thickness direction), aluminum nitride (170 W/m-K), silicon carbide (360 W/m-K), fused amorphous silica (1.5 W/m-K), calcium carbonate (∼2-5 W/m-K), zirconia dioxide (∼2 W/m-K), zinc oxide (21 W/m-K), and alumina (26 W/m-K).

While metallic particles such as copper particles, iron particles, lead particles and silver particles, to name a few, have thermal conductivities in excess of 100 W/m-K, they are not suitable for the current application due to their electrical conductivity. Similarly, graphite and carbon nanotubes cannot be used in the insulating nonwoven materials of the current invention.

In addition, the inorganic component of the exemplary nonwoven materials can include another inorganic filler. In one aspect, suitable other inorganic fillers include, but are not limited to, kaolin clay, talc, mica, montmorillonite, smectite, bentonite, illite, chlorite, sepiolite, attapulgite, halloysite, vermiculite, laponite, rectorite, perlite, and combinations thereof. These other inorganic fillers may be surface treated to facilitate their incorporation into the exemplary nonwoven materials. Suitable types of kaolin clay include, but are not limited to, water-washed kaolin clay; delaminated kaolin clay; calcined kaolin clay; and surface-treated kaolin clay. In one example, the electrically insulating nonwoven material comprises from about 5% to about 20% kaolin clay by weight.

The inorganic component of the electrically insulating nonwoven material can optionally include an inorganic flame retardant. The inorganic flame retardant may be any suitable material. Examples of suitable inorganic flame retardant materials include metal hydroxides, e.g., magnesium hydroxide (MgOH) and alumina trihydrate (ATH). The inorganic flame retardant may comprise up to about 20 wt.%, preferably up to about 15 wt.% of the nonwoven material. In some aspects of the invention, the inorganic flame retardant can have a sufficiently high thermal conductivity such that it can be used as the second thermally conductive filler or as a tertiary or third thermally conductive filler. For example, ATH has a thermal conductivity between 10-30 W/m-K.

In an exemplary aspect, the organic fiber mat can be saturated with an aqueous slurry comprising the polymeric binder, and the first and second thermally conductive fillers, clay particles and an optional inorganic flame retardant material and then dried and calendered to produce the thermally conductive, electrically insulating nonwoven material of the present invention.

Additional formulation additives known to those skilled in the art, such as, wetting and dispersing agents, viscosity modifiers, antioxidants, stabilizers, adhesion promoters, pigments, etc., can also be incorporated within the aqueous slurry.

In some embodiments, the exemplary insulating material may further include a film or mesh reinforcement which is laminated with the exemplary nonwoven material described herein. An exemplary laminate material may comprise one or more sheets of the exemplary nonwoven material. A plurality of plies or sub-layers the exemplary nonwoven material can be combined to form a thicker nonwoven layer. The plies or sub-layers may be the same or different materials. The layers in the laminate or the sub-layers of nonwoven material may be combined by any suitable means such as using a chemical adhesive or by processes such as calendaring. In one aspect, a relatively thin non-thermally conductive film compared to the thickness of the exemplary electrically insulating, thermally conductive nonwoven material described herein can be laminated to the exemplary nonwoven to provide mechanical or dielectric reinforcement and still result in improved laminate thermal conductivity that is higher than conventional nonwoven material laminates. For example, a thin polyester film could be laminated to one or both sides of the exemplary nonwoven material described herein. The lamination can be a direct lamination of the film to the nonwoven material or may further comprise a thin adhesive layer to bond the film to the exemplary nonwoven material. In an alternative construction, the exemplary nonwoven material described herein can be laminated to either side of a polymer film. Higher order laminates that are composed of more than 3 layers can be formed by alternating nonwoven material layers and polymer film layers.

Exemplary polymer films or meshes can be formed from polyethylene terephthalate (PET), polybutylene terephthalate (PBT), polyetheretherketone (PEEK), polyphenylsulfone, polyphenylene sulfide, polyethylene naphthalate, and polyimide. In an alternative aspect, the polymer film layer can comprise a thermal conductivity film. Exemplary thermal conductivity films include thermally conductive polyimide films Devinall THB 500 polyimide and Devinall THB 300 Polyimide available from Fastel Adhesive Products (San Clemente, CA) and Kapton 200MT polyimide film, Kapton 300MT polyimide film available from DuPont (Wilmington, DE); thermally conductive polyester films such as are described in United States Patent Publ. No. 2017-0240788 and PCT Patent Application No. WO 2019/030600,

and thermally conductive polyester copolymer films such as are described in PCT Patent Application No. WO 2019/030608.

In an exemplary aspect, the laminate material formed at least in part from the exemplary nonwoven materials, described herein, can be used as insulating materials in electrical equipment, such as transformers, motors, generators. Heat is an undesirable by-product of electrical transformers, motors, and generators. For example, the exemplary laminate materials can be used as a thermally conductive, electrically insulating slot liner that is positioned between the heat generating conductor wires and more thermally conductive metal portions of the electrical equipment. In addition, the exemplary materials are sufficiently robust so that they can be used with automatic slot liner installation equipment materials.

Low thermal conductive slot liner materials can be an area within a motor or generator that can restrict heat dissipation.

Exemplary nonwoven materials of the present invention should have a dielectric strength nonwoven of at least 78.7 kV/cm (200 V/mil), preferably greater than 98.4 kV/cm (250 V/mil) ; thermal conductivity of TC nonwoven of greater than 0.30 W/mK, preferably greater than 0.35 W/mK, or more preferably greater than 0.40 W/mK at 180°C; an elongation of greater than 5%, preferably greater than 10%; and/or a tensile strength in the machine direction of greater than 0.876 N/mm (% lb/in).

Exemplary laminates formed from the nonwoven materials of the present invention should have a dielectric strength nonwoven of greater than 315.0 kV/cm (800 V/mil), preferably greater than 393.7 kV/cm (1000 V/mil); thermal conductivity of greater than 0.20 W/mK, preferably greater than 0.25 W/mK; an elongation of greater than 5%, preferably greater than 10%; and/or a tensile strength in the machine direction of greater than 8.76 N/mm (50 lb/in), preferably greater than 17.5 N/mm (100 lb/in).

### Examples

The following examples and comparative examples are offered to aid in the understanding of the present invention and are not to be construed as limiting the scope thereof. Unless otherwise indicated, all parts and percentages are by weight. The following test methods and protocols were employed in the evaluation of the illustrative and comparative examples that follow.

### Materials

| | |
|---|---|
| T221 | Type 221 Polyester Staple, 1.5 denier x 2", available from Auriga Polymers Inc (Spartansburg, SC) |
| T291-3 | Type 291 Polyester Staple, 3 denier x 2", available from Auriga Polymers Inc (Spartansburg, SC) |
| T291-2.25 | Type 291 Polyester Staple, 2.25 denier x 2", available from Auriga Polymers Inc (Spartansburg, SC) |
| T259 | Type 259 Polyester Staple, 4 denier x 32 mm, is an undrawn, non-heat set polyester fiber with a crystallinity of 8-10% available from Auriga Polymers Inc (Spartansburg, SC) |
| T202 | T-202 (CoPET/PET, weight ratio was about 50 to 50) staple fiber, 3 denier x 38 mm, with 180C Sheath from Fiber Innovation Technology (Johnson City, TN) |
| SN3258 | Eastlon SN-3258CM, 2 denier x 51 mm, Bicomponent Co-polyester/Polyester Fiber with 180oC sheath melting temperature, available from Far Eastern New Century Corp (Taipei, Taiwan) |
| T264 | Trevira Type 262 Bicomponent Fiber, 2.2 dtex x 50 mm, Bicomponent Co-polyester/Polyester with 210oC sheath melting temperature, available from Trevira GmbH (Bobingen, Germany) Polyester/polyethylene? |
| hBN-3 | 3M™ Boron Nitride Powder Grade CFP 003, available from ESK Ceramics GmbH & Co. KG, a 3M company (Kempten, Germany) |
| hBN-6 | 3M™ Boron Nitride Powder Grade CFP 006, available from ESK Ceramics GmbH & Co. KG, a 3M company (Kempten, Germany) |
| hBN-5 | 3M™ Boron Nitride Powder Grade CFA 50, available from ESK Ceramics GmbH & Co. KG, a 3M company (Kempten, Germany) |
| FS-20 | 3M™ Fused Silica 20, available from 3M Company (St. Paul, MN) |
| Clay | Delaminated kaolin clay, available under the tradename HYDRAPRINT from KaMin, LLC (Macon, GA) |
| ATH | Micral® 9400 D Alumina Trihydrate, available from J.M. Huber Corporation (Atlanta, GA) |
| W3N | Hubercarb W3N Calcium carbonate, available from J.M. Huber Corporation (Atlanta, GA) |
| Polymeric Binder | Styrene-acrylic emulsion polymer available under the trade name RayKote® 14145 from Specialty Polymers, Inc. (Woodburn, OR) |
| Polymeric Binder | Styrene-acrylic emulsion polymer available under the trade name RayKote® 1405 from Specialty Polymers, Inc. (Woodburn, OR) |
| 3 mil PET | 3 mil Polyester film |
| 5mil PET | 5 mil Polyester film |
| 3 mil PI | 3 mil APICAL® Polyimide Film available from Kaneka Corporation (Japan) |
| 4 mil PI | 4 mil Polyimide Film available from Baoyung County Jinggong Insulation Material Company (China) |
| 3 mil HCT | 3 mil thermally conductive polyester film as described in United States Provisional Patent Application No. 62/541920. |

### Comparative Materials

| | |
|---|---|
| TFT 3-3-3 | 3M™ TufQUIN TFT 3-3-3 Triplex Electrical Insulation Paper available from 3M Company (St. Paul, MN) |
| TFT 3-5-3 | 3M™ TufQUIN TFT 3-5-3 Triplex Electrical Insulation Paper available from 3M Company (St. Paul, MN) |
| NMN 3-3-3 | NMN 3-3-3 are Nomex paper/Polyester/Nomex Paper laminates available from Von Roll USA, Inc. (Schenectady, NY) |
| NMN 3-5-3 | NMN 3-5-3 are Nomex paper/Polyester/Nomex Paper laminates available from Von Roll USA, Inc. (Schenectady, NY) |
| DMD 100 3-3-3 | DMD 100 Electrical Insulation Paper (Product 333) is a Dacron Mylar Dacron laminate available from W.S. Hampshire, Inc. (Hampshire, IL) |
| DMD 100 3-5-3 | DMD 100 Electrical Insulation Paper (Product 353) is a Dacron Mylar Dacron laminate available from W.S. Hampshire, Inc. (Hampshire, IL) |
| DMD 70 3-3-3 | DMD 70 Electrical Insulation Paper Sheet (Product 333) is a Dacron Mylar Dacron laminate available from W.S. Hampshire, Inc. (Hampshire, IL) |

### Test Methodologies

### Thermal Conductivity

Thermal conductivity values were measured with a Unitherm model 2021 guarded heat flow meter according to ASTM E-1530. Measurements were taken at 180°C. Samples were measured without use of any interfacial fluid/material to avoid any potential complications with the interfacial fluid/material penetrating the porous areas of the electrical insulation paper. Without the use of an interfacial fluid, thermal losses at the interface between the test plate surface and the sample material surface will be included in the thermal conductivity measurement which may make the measured thermal conductivity value reported here lower than the actual inherent material's thermal conductivity. Thinner samples were stacked together until the thermal resistance was within the instrument's calibration range. The thermal conductivity of a conventional Nomex® Paper Type 410 available from DuPont Advanced Fibers Systems (Richmond, VA) was found to be 0.10 W/m-K, and the thermal conductivity of a conventional 3M™ TufQUIN 110 Hybrid Inorganic/Organic Insulating Nonwoven Material available from 3M Company (St. Paul, MN) was found to be 0.18 W/m-K.

### Air Permeability

Air permeability values were measured using a FX3300 Air Permeability Tester III from Advanced Testing Instruments (Greer, SC).

### Additional Test Methods

Additional mechanical, electrical and physical properties were measured according to the following standardized test procedures.

| **PROPERTY** | **TEST METHOD** | **TITLE** |
|---|---|---|
| Dielectric Strength | ASTM D149-09 | Standard Test Method for Dielectric Breakdown Voltage and Dielectric Breakdown Strength of Solid Electrical Insulating Materials at Commercial Power Frequencies |
| MD Tensile Strength | ASTMD-828-97 (2002) | Standard Test Method for Tensile Properties of Paper and Paperboard Using Constant-Rate-of-Elongation Apparatus |
| Elongation, MD | ASTMD-828-97 (2002) | Standard Test Method for Tensile Properties of Paper and Paperboard Using Constant-Rate-of-Elongation Apparatus |
| Tear Strength, CD | ASTM D-689 | Standard Test Method for Internal Tearing Resistance of Paper |

### Preparation of Nonwoven Materials:

The exemplary electrically insulating nonwoven fabric materials were made using methods known in the art, as follows:
Nonwoven fiber blends consisting of blends of drawn polyester (PET) staple fibers, bicomponent polyester binder fibers, and/or undrawn PET binder fibers were formed according to the compositions provided in Table 1 with the corresponding physical and mechanical properties provided in Table 2. The fiber mixtures were passed through a carding machine to yield nonwoven battings with basis weights between 24-30 gsm (grams per square meter). The nonwoven batting was then calendered through a steel cotton nip, with the steel roll heated to a temperature between 362-385°F (185-196°C) and a nip pressure between 52.5-131.4 kN/m (300-750 PLI (pound/linear inch)).

The physical and mechanical properties of conventional nonwoven materials which are usable for the current invention are provided in Table 3. Conventional polyester nonwoven materials can include Style 3050, Style 2030, and Style 2025 polyester nonwoven materials available from 3M Company (Haverhill, MA).

**Table 1. Composition and calendaring conditions for exemplary nonwoven mats**

| Sample ID | PET Staple Fiber | Bicomponent Fiber | Basis Weight (gsm) | Nip Pressure (pLI) | Calendering Tem perature (°F/°C) | Line speed (FPM) |
|---|---|---|---|---|---|---|
| NW A | 65% T291-2.25 | 35% T264 | 30 | 400 | 385/196 | 32 |
| NW B | 70% T291-2.25 | 30% T264 | 30 | 300 | 384/195.6 | 32 |
| NW C | 70% T291-2.25 | 30% T264 | 30 | 600 | 384/195.6 | 32 |
| NW D | 70% T291-2.25 | 30% SN3258 | 27 | 300 | 362/183 | 32 |
| NW E | 70% T291-2.25/ 10% T259 | 20% T202 | 24 | 750 | 382/194 | 150 |
| NW F | 70% T291-2.25/ 10% T259 | 20% SN3258 | 25 | 750 | 382/194 | 150 |
| NW G | 70% T291-2.25 | 30% SN3258 | 29 | 300 | 382/194 | 150 |
| NW H | 70% T291-3 | 30% T264 | 24 | 300 | 384/195.6 | 32 |
| NWI | 70% T291-2.25 | 30% T264 | 28 | 275 | 395/201.7 | 150 |
| NW J | 70% T291-2.25 | 30% T264 | 31 | 300 | 395/201.7 | 120 |

**Table 2. Physical and mechanical properties of the nonwoven mats of Table 1**

| Sample ID | Basis Weight (gsm) | Thickness (mils) | MD Tensile Strength (lb/in) | MD Elongation (%) | CD Tear Strength (g) | Air Permeability (CFM) |
|---|---|---|---|---|---|---|
| NW A | 30 | 2.0 | 9.5 | 25.3 | 251 | 165 |
| NW B | 30 | 2.2 | 6.4 | 27.7 | 276 | 203 |
| NW C | 30 | 2.1 | 7.3 | 29.8 | 259 | 171 |
| NW D | 27 | 1.7 | 5.3 | 29.8 | 240 | 203 |
| NW E | 24 | 1.9 | 6.3 | 20.3 | 192 | 185 |
| NW F | 25 | 1.8 | 8.6 | 19.6 | 201 | 148 |
| NW G | 29 | 2.0 | 12.7 | 20.9 | 235 | 173 |
| NW H | 24 | 2.1 | 4.5 | 40 | 163 | 342 |
| NW I | 28 | 2.0 | 6.9 | 12.1 | 201 | 187 |
| NW J | 31 | 2.2 | 9.1 | 17.4 | 254 | 132 |

**Table 3. Physical and mechanical properties of conventional polyester nonwoven materials**

| Sample ID | Basis Weight (gsm) | Thickness (mils) | MD Tensile Strength (lb/in) | MD Elongation (%) | CD Tear Strength (g) | Air Permeability (CFM) |
|---|---|---|---|---|---|---|
| 3050 | 60 | 3.0 | 12 | 27.1 | 342 | |
| 2030 | 36 | 2.0 | 7 | 27.6 | 218 | 27.6 |
| 2025 | 30 | 1.7 | 6 | 25.5 | 250 | 52.1 |

### Slurry Preparation

Aqueous particle filled slurry solutions were prepared by blending filler particles, polymeric binder, and water in a laboratory mixer with a three-blade propeller. The solids contents of the aqueous slurries were between about 40% - 70%. The slurry compositions in terms of solids content is provided in Table 4. The latex binder for slurries S1-S11 used was Raykote® 14145, whereas the latex binder for slurry S12 was a 65wt%/35wt% blend of Raykote® 14145/ Raykote® 1405.

**Table 4. Slurry composition slurry compositions in terms of solids content (wt. %)**

| Slurry ID | hBN-5 | hBN-3 | hBN-6 | ATH | FS-20 | W3N | Clay | Latex Binder |
|---|---|---|---|---|---|---|---|---|
| S1 | 40 | | | 32 | | | 8 | 20 |
| S2 | | | | 32 | 40 | | 8 | 20 |
| S3 | | | 10 | | 22 | 40 | 8 | 20 |
| S4 | | | 20 | | | 40 | 20 | 20 |
| S5 | | | 30 | | | 30 | 20 | 20 |
| S6 | | | 20 | | | 40 | 20 | 20 |
| S7 | | | 40 | | | 20 | 20 | 20 |
| S8 | 40 | | | | | 20 | 20 | 20 |
| S9 | 60 | | | 12 | | | 8 | 20 |
| S10 | | | | | | | 80 | 20 |
| S11 | | | | | | 60 | 20 | 20 |

### Nonwoven Saturation

For the exemplary particle filled nonwoven mats SN1-SN6 and SN8-SN16, the nonwoven mats were dipped in a prescribed slurry to saturate the nonwoven mat and then pulled manually in between two #20 Mayer rods located on opposite sides of the nonwoven sheet to control coating thickness. The saturated nonwoven was then placed in an oven at 140°C for about 2 minutes.

Example SN7 was made in a continuous slurry dipping and coating process at a line speed of 3 feet per minute using roll tension controls, offset Mayer rods, and a 91.44 cm (36 ") length conveyor oven zone 1 temperature of 130°C and zone 2 temperature of 182°C.

The particle filled nonwoven mats were calendered between a steel-steel nip at about 107.2°C - 137.8°C (225°F - 280°F) and a nip pressure around 157.6 kN/m (900 PLI) with a line speed of about 1.524 m/minute (5 ft/minute).

Details about the particle filled mats are provided in Table 5.

Exemplary particle filled mat SN17 was made in a continuous slurry dipping and coating process using offset square rods at a line speed of about 24.384 m/minute (80 ft/minute) and then dried around 180°C for about 1 minute.

**Table 5. Composition and properties of exemplary particle filled nonwoven mats**

| Example ID | Nonwoven ID | Slurry ID | Percent solids in the slurry | Thickness (mil) | Basis weight (gsm) | Thermal Conductivity at 180°C (W/m-K) | Dielectric Strength (V/mil) | Tensile Strength MD (lb/in) | Elongation MD (%) | Inorganic Fraction (%) | Organic Fraction (%) |
|---|---|---|---|---|---|---|---|---|---|---|---|
| SN-1 | NW A | S1 | 42% | 3.0 | 96 | 0.525 | 276 | 15 | 20 | 55.0% | 45.0% |
| SN-2 | NW A | S2 | 42% | 3.2 | 96 | 0.332 | 293 | 16 | 23 | 55.0% | 45.0% |
| SN-3 | NW E | S3 | 69% | 2.0 | 92 | 0.35 | 360 | 12 | 13 | 59.1% | 40.9% |
| SN-4 | NW F | S3 | 69% | 2.8 | 91 | 0.35 | 264 | 12 | 12 | 58.0% | 42.0% |
| SN-5 | NW G | S4 | 65% | 2.8 | 112 | 0.47 | 346 | 16 | 17 | 59.3% | 40.7% |
| SN-6 | NW G | S5 | 61% | 2.9 | 102 | 0.52 | 331 | 17 | 21 | 57.3% | 42.7% |
| SN-7 | NW G | S6 | 63% | 3.5 | 143 | 0.51 | 276 | 15 | 34 | 63.8% | 36.2% |
| SN-8 | NW B | S4 | 64% | 3.4 | 119 | 0.44 | 283 | 11 | 25 | 59.8% | 40.2% |
| SN-9 | NW C | S4 | 64% | 3.1 | 111 | 0.38 | 302 | 11 | 17 | 58.4% | 41.6% |
| SN-10 | NW D | S4 | 64% | 3.2 | 112 | 0.46 | 269 | 12 | 17 | 60.7% | 39.3% |
| SN-11 | 2025 | S4 | 64% | 2.5 | 83 | 0.31 | 333 | 15 | 20 | 51.1% | 48.9% |
| SN-12 | 2030 | S4 | 64% | 3.1 | 115 | 0.34 | 304 | 18 | 20 | 55.0% | 45.0% |
| SN-13 | 3050 | S4 | 64% | 2.8 | 143 | 0.30 | 286 | 13 | 17 | 46.4% | 53.6% |
| SN-14 | NW G | S10 | 64% | 2.7 | 89 | 0.26 | 313 | 16 | 18 | 53.9% | 46.1% |
| SN-15 | NW G | S11 | 64% | 2.9 | 98 | 0.31 | 223 | 16 | 21 | 56.3% | 43.7% |
| SN-16 | NW I | S4 | 64% | 2.9 | 98 | 0.42 | 310 | 18 | 17 | 57.1% | 42.9% |
| SN-17 | NW J | S12 | 64% | 3.8 | 92 | 0.33 | 200 | 19 | 13 | 53.0% | 47.0% |

### Nonwoven/Polymer Film Laminate Preparation

A Mayer rod (#20 wire size) was used to coat a laminating adhesive, such as ROBOND™ L-330/CR 9-101 Laminating Adhesive available from (Dow Chemical Company, Midland MI), onto the surface of a polymer film which was then dried in a lab oven for 1 minute at 250°F (121°C). A layer of a particle filled nonwoven mat was then laminated to the film with the laminating adhesive in a laboratory hot roll laminator (Chemsultants International) at 250°F (121°C) and 1.524 m/minute (5 ft/minute).

This process was repeated to apply a second layer of the particle filled nonwoven mat on the other side of the polymer film to yield a particle filled nonwoven mat/polymer film particle filled nonwoven mat.

Exemplary L10 laminate was calendered between a steel-steel nip at about 107.2°C - 137.8°C (225°F - 280°F) and a nip pressure around 157.6 kN/m (900 PLI) with a line speed of about 1.524 m/minute (5 ft/minute).

Results for a series of exemplary laminate materials is provided in Table 6. Properties of comparative commercially available laminate materials are provided in Table 7. Note that the laminate layer notation provides input on the nominal layer thicknesses in mils of each layer in the laminate construction.

**Table 6. Composition and properties of laminate constructions comprising the exemplary particle filled nonwoven mats**

| Example ID | Laminate layer Notation | Particle Filled Nonwoven Ex. ID | Polymer Film | Thickness (mil) | Basis Weight (gsm) | Thermal Conductivity at 180 °C (W/m-K) | Dielectric Strength (V/mil) | MD Tensile Strength (lb/in) | MD Elongation (%) | CD Tear Strength (g) |
|---|---|---|---|---|---|---|---|---|---|---|
| L1 | 3-3-3 | SN-7 | 3 mil PET | 11.7 | 390 | 0.25 | 1009 | 103 | 30 | 560 |
| L2 | 3-5-3 | SN-7 | 5 mil PET | 12.1 | 402 | 0.25 | 1260 | 137 | 37 | 726 |
| L3 | 3-3-3 | SN-7 | 3 mil PI | 11.1 | 406 | 0.27 | 1162 | 117 | 24 | 464 |
| L4 | 3-3-3 | SN-7 | 3 mil HTC | 10.7 | 407 | 0.35 | 1028 | 54 | 25 | 480 |
| L5 | 3-3-3 | SN-16 | 3 mil PI | 8.9 | 319 | 0.26 | 1366 | 111 | 30 | 788 |
| L6 | 3-3-3 | SN-16 | 3mil PET | 9.1 | 315 | 0.23 | 1347 | 98 | 36 | 816 |
| L7 | 3-3-3 | SN-16 | 3 mil HTC | 8.8 | 353 | 0.35 | 1133 | 52 | 14 | 672 |
| L8 | 3-3-3 | SN-8 | 3 mil PET | 9.2 | 329 | 0.25 | 1359 | 101 | 47 | 811 |
| L9 | 3-3-3 | SN-8 | 3 mil PI | 9.6 | 342 | 0.28 | 1455 | 104 | 43 | 661 |
| L10 | 3-4-3 | SN-17 | 4 mil PI | 9.6 | 332 | 0.37 | 1208 | 115 | 24 | 1195 |

**Table 7. Properties of Comparative Laminate Materials**

| Laminate ID | Thickness (mil) | Basis weight (gsm) | Thermal Conductivity at 180°C (W/m-K) | Dielectric Strength (V/mil) | MD Tensile Strength (lb/in) | MD Elongation (%) | CD Tear Strength (g) |
|---|---|---|---|---|---|---|---|
| TFT 3-3-3 | 9.6 | 304 | 0.17 | 1146 | 96 | 28 | 1190 |
| TFT 3-5-3 | 11.3 | 375 | 0.17 | 1327 | 128 | 30 | 1260 |
| NMN 3-3-3 | 10 | 266 | 0.12 | 1300 | 170 | 23 | 544 |
| NMN 3-5-3 | 12 | 331 | 0.13 | 1417 | 175 | 26 | 789 |
| DMD 100 3-3-3 | 9 | 250 | 0.13 | 1200 | 109 | 21 | 501 |
| DMD 100 3-5-3 | 11 | 320 | 0.15 | 1564 | 143 | 19 | 624 |
| DMD 70 3-3-3 | 9 | 239 | 0.15 | 1420 | 99 | 17 | 1024 |

## Claims

1. A thermally conductive, electrical insulating nonwoven material comprising:
20 wt.% - 50 wt.% organic components, wherein the organic components comprise organic drawn fibers, organic bi-component binder fibers, and a polymer latex binder comprising at least one of an acrylic latex, an acrylic copolymer latex, a nitrile latex, and a styrene latex; and
50 wt.% - 80 wt.% inorganic components wherein the inorganic components comprise a blend of thermally conductive fillers and clay,
wherein the organic bi-component binder fibers comprise a polymeric core and a sheath layer surrounding the polymeric core wherein the sheath layer has a lower melting point than the core.

2. The nonwoven material of claim 1, wherein the organic drawn fibers have a crystallinity greater than 40%.

3. The nonwoven material of any of the preceding claims, further comprising undrawn organic binder fibers, wherein the undrawn fibers have a crystallinity of less than about 10%.

4. The nonwoven material of claim 1, wherein organic bi-component binder fibers comprise a polyester core surrounded by a polyphenylene sulfide sheath, or a co-polyester sheath.

5. The nonwoven material of any of the preceding claims, wherein the first thermally and second thermally conductive can be selected from boron nitride, silicon nitride, aluminum nitride, silica, alumina, calcium carbonate, and alumina trihydrate.

6. The nonwoven material of any of the preceding claims, wherein the nonwoven material has a thermal conductivity that is greater than 0.3 W/m-K at 180°C.

7. The nonwoven material of any of the preceding claims, wherein the nonwoven material has a dielectric strength of at least 78.7 kV/cm (200 V/mil).

8. The nonwoven material of any of the preceding claims, wherein the nonwoven material has a machine direction tensile strength that is greater than 8.76 N/mm (5 lb/in).

9. An electrical insulating material for electrical equipment, wherein the electrical insulating material comprises the nonwoven material of any of the preceding claims.

10. A thermally conductive insulating material, further comprising a polymer film laminated to a first surface the nonwoven material of any of claims 1-9.

11. The thermally conductive insulating material of claim 10, wherein the polymer film is a thermally conductive polymer film.

12. The thermally conductive insulating material of claims 10 or 11, further comprising a second layer nonwoven material laminated to a second surface of the polymer film.

13. The thermally conductive insulating material of any claims 10-12, wherein the thermally conductive insulating material has a thermal conductivity of greater than 0.20 W/mK.

14. The thermally conductive insulating material of any claims 10-13, wherein the thermally conductive insulating material has a dielectric strength of greater than 315.0 kV/cm (800 V/ mil).

15. The thermally conductive insulating material of any claims 10-14, wherein the thermally conductive insulating material has an elongation of greater than 5%.

## Patentansprüche

1. Ein wärmeleitfähiges, elektrisch isolierendes Vliesmaterial, umfassend:
zu 20 Gew.-% bis 50 Gew.-% organische Bestandteile, wobei die organischen Bestandteile organische gezogene Fasern, organische Zweikomponenten-Bindemittelfasern und ein Polymerlatex-Bindemittel umfassen, umfassend mindestens eines von einem Acryllatex, einem Acrylcopolymerlatex, einem Nitrillatex und einem Styrollatex; und
zu 50 Gew.-% bis 80 Gew.-% anorganische Bestandteile, wobei die anorganischen Bestandteile eine Mischung aus wärmeleitfähigen Füllstoffen und Ton umfassen,
wobei die organischen Zweikomponenten-Bindemittelfasern einen Polymerkern und eine den Polymerkern umgebende Mantelschicht umfassen, wobei die Mantelschicht einen niedrigeren Schmelzpunkt als der Kern aufweist.

2. Das Vliesmaterial nach Anspruch 1, wobei die organischen gezogenen Fasern eine Kristallinität von mehr als 40 % aufweisen.

3. Das Vliesmaterial nach einem der vorstehenden Ansprüche, ferner umfassend nicht gezogene organische Bindemittelfasern, wobei die ungezogenen Fasern eine Kristallinität von weniger als etwa 10 % aufweisen.

4. Das Vliesmaterial nach Anspruch 1, wobei die organischen Zweikomponenten-Bindemittelfasern einen Polyesterkern umfassen, der von einem Polyphenylensulfidmantel oder einem Copolyestermantel umgeben ist.

5. Das Vliesmaterial nach einem der vorstehenden Ansprüche, wobei die erste und die zweite wärmeleitfähige ausgewählt sein können aus Bornitrid, Siliciumnitrid, Aluminiumnitrid, Siliciumdioxid, Aluminiumoxid, Calciumcarbonat und Aluminiumoxidtrihydrat.

6. Das Vliesmaterial nach einem der vorstehenden Ansprüche, wobei das Vliesmaterial eine Wärmeleitfähigkeit von mehr als 0,3 W/m-K bei 180 °C aufweist.

7. Das Vliesmaterial nach einem der vorstehenden Ansprüche, wobei das Vliesmaterial eine dielektrische Festigkeit von mindestens 78,7 kV/cm (200 V/mil) aufweist.

8. Das Vliesmaterial nach einem der vorstehenden Ansprüche, wobei das Vliesmaterial eine Zugfestigkeit in Maschinenrichtung von mehr als 8,76 N/mm (5 lb/in) aufweist.

9. Ein elektrisches Isoliermaterial für elektrische Geräte, wobei das elektrische Isoliermaterial das Vliesmaterial nach einem der vorstehenden Ansprüche umfasst.

10. Ein wärmeleitfähiges Isoliermaterial, ferner umfassend eine Polymerfolie, die auf eine erste Oberfläche des Vliesmaterials nach einem der Ansprüche 1 bis 9 laminiert ist.

11. Das wärmeleitfähige Isoliermaterial nach Anspruch 10, wobei die Polymerfolie eine wärmeleitfähige Polymerfolie ist.

12. Das wärmeleitfähige Isoliermaterial nach den Ansprüchen 10 oder 11, ferner umfassend eine zweite Schicht Vliesmaterial, die auf eine zweite Oberfläche der Polymerfolie laminiert ist.

13. Das wärmeleitfähige Isoliermaterial nach einem der Ansprüche 10 bis 12, wobei das wärmeleitfähige Isoliermaterial eine Wärmeleitfähigkeit von mehr als 0,20 W/mK aufweist.

14. Das wärmeleitfähige Isoliermaterial nach einem der Ansprüche 10 bis 13, wobei das wärmeleitfähige Isoliermaterial eine dielektrische Festigkeit von mehr als 315,0 kV/cm (800 V/mil) aufweist.

15. Das wärmeleitfähige Isoliermaterial nach einem der Ansprüche 10 bis 14, wobei das wärmeleitfähige Isoliermaterial eine Dehnung von mehr als 5 % aufweist.

## Revendications

1. Matériau non tissé thermoconducteur, électriquement isolant comprenant :
20 % en poids à 50 % en poids de composants organiques, dans lequel les composants organiques comprennent des fibres étirées organiques, des fibres de liaison organiques bicomposantes, et un liant de latex polymère comprenant au moins l'un parmi un latex acrylique, un latex de copolymère acrylique, un latex de nitrile et un latex de styrène ; et
50 % en poids à 80 % en poids de composants inorganiques dans lequel les composants inorganiques comprennent un mélange de charges thermoconductrices et d'argile,
dans lequel les fibres de liaison organiques bicomposantes comprennent un noyau polymère et une couche de gaine entourant le noyau polymère dans lequel la couche de gaine a un point de fusion plus bas que le noyau.

2. Matériau non tissé selon la revendication 1, dans lequel les fibres étirées organiques ont une cristallinité supérieure à 40 %.

3. Matériau non tissé selon l'une quelconque des revendications précédentes, comprenant en outre des fibres de liaison organiques non étirées, dans lequel les fibres non étirées ont une cristallinité inférieure à environ 10 %.

4. Matériau non tissé selon la revendication 1, dans lequel les fibres de liaison organiques bicomposantes comprennent un noyau de polyester entouré par une gaine de sulfure de polyphénylène, ou une gaine de co-polyester.

5. Matériau non tissé selon l'une quelconque des revendications précédentes, dans lequel les premier et deuxième thermoconducteurs peuvent être choisis parmi nitrure de bore, nitrure de silicium, nitrure d'aluminium, silice, alumine, carbonate de calcium et trihydrate d'alumine.

6. Matériau non tissé selon l'une quelconque des revendications précédentes, dans lequel le matériau non tissé a une conductivité thermique qui est supérieure à 0,3 W/m-K à 180 °C.

7. Matériau non tissé selon l'une quelconque des revendications précédentes, dans lequel le matériau non tissé a une rigidité diélectrique d'au moins 78,7 kV/cm (200 V/mil).

8. Matériau non tissé selon l'une quelconque des revendications précédentes, dans lequel le matériau non tissé a une résistance à la traction dans la direction machine qui est supérieure à 8,76 N/mm (5 livres/po).

9. Matériau électriquement isolant pour équipement électrique, dans lequel le matériau électriquement isolant comprend le matériau non tissé selon l'une quelconque des revendications précédentes.

10. Matériau isolant thermoconducteur, comprenant en outre un film polymère stratifié à une première surface du matériau non tissé selon l'une quelconque des revendications 1 à 9.

11. Matériau isolant thermoconducteur selon la revendication 10, dans lequel le film polymère est un film polymère thermoconducteur.

12. Matériau isolant thermoconducteur selon les revendications 10 ou 11, comprenant en outre un matériau non tissé de deuxième couche stratifié à une deuxième surface du film polymère.

13. Matériau isolant thermoconducteur selon l'une quelconque des revendications 10 à 12, dans lequel le matériau isolant thermoconducteur a une conductivité thermique supérieure à 0,20 W/mK.

14. Matériau isolant thermoconducteur selon l'une quelconque des revendications 10 à 13, dans lequel le matériau isolant thermoconducteur a une rigidité diélectrique supérieure à 315,0 kV/cm (800 V/mil).

15. Matériau isolant thermoconducteur selon l'une quelconque des revendications 10 à 14, dans lequel le matériau isolant thermoconducteur a un allongement supérieur à 5 %.
